# FASCICULE DE BREVET EUROPEEN

(11) **EP 4 158 170 B1**
(45) Date de publication et mention de la délivrance du brevet: **08.05.2024**
(21) Numéro de dépôt: 21734194.0
(22) Date de dépôt: 25.05.2021
(51) Int. Cl.: F02C 3/22, F02C 7/236

(54) **DISPOSITIF DE RÉGULATION DE LA PRESSION D'UN RÉSERVOIR DE CARBURANT CRYOGÉNIQUE D'UN AÉRONEF.**
VORRICHTUNG ZUR DRUCKREGELUNG EINES KRYOGENEN FLUGZEUGKRAFTSTOFFTANKS
DEVICE FOR REGULATING THE PRESSURE OF AN AIRCRAFT CRYOGENIC FUEL TANK

(30) Priorité: 28.05.2020 FR 2005627
(43) Date de publication de la demande: 05.04.2023
(73) Titulaire: SAFRAN, 75015 Paris (FR)
(72) Inventeur: JOUAN, Hugo Pierre Mohamed, 77550 MOISSY-CRAMAYEL (FR); LAMBERT, Pierre-Alain, 77550 MOISSY-CRAMAYEL (FR); PIATON, Valery Pascal Marc Marie, 77550 MOISSY-CRAMAYEL (FR)
(74) Mandataire: Regimbeau
(86) Numéro de dépôt international: PCT/FR2021/050943
(87) Numéro de publication internationale: WO 2021/240106

(56) Documents cités:
- WO-A1-2012/173651
- WO-A2-2012/045035
- US-A1- 2014 174 106

## Description

### DOMAINE DE L'INVENTION

L'invention se situe dans le domaine des turbomachines d'aéronefs dont la chambre de combustion est alimentée en carburant cryogénique.

La présente invention concerne plus précisément un dispositif de régulation de la pression à l'intérieur d'un réservoir de stockage de carburant cryogénique, tel que du gaz naturel, dont une partie se trouve à l'état liquide et une autre partie à l'état gazeux, ce carburant alimentant la chambre de combustion d'une turbomachine d'aéronef.

L'invention concerne également un aéronef comprenant au moins un réservoir embarqué de carburant cryogénique, au moins une turbomachine munie d'une chambre de combustion fonctionnant audit carburant cryogénique et cet aéronef étant équipé du dispositif de régulation de la pression précité.

L'invention concerne également un ensemble de régulation de la pression à l'intérieur d'un tel réservoir, cet ensemble comprenant un aéronef tel que précité et une installation aéroportuaire.

L'invention concerne enfin un procédé de régulation de la pression à l'intérieur d'un réservoir embarqué de stockage de carburant cryogénique, mis en oeuvre à l'aide du dispositif de régulation ou de l'ensemble de régulation précités.

### ETAT DE LA TECHNIQUE

Les carburants cryogéniques sont habituellement mis en oeuvre pour la propulsion spatiale car ils permettent des rendements thermodynamiques meilleurs. Leur transposition au domaine de l'aéronautique et l'industrialisation de leur emploi à grande échelle conduit toutefois à devoir résoudre un certain nombre de problèmes techniques, notamment en ce qui concerne leur stockage.

Un exemple de carburant cryogénique est par exemple le gaz naturel liquide, (connu sous l'acronyme "GNL").

Les carburants cryogéniques liquides stockés dans un réservoir ont tendance à se réchauffer, à changer d'état et donc à se vaporiser, ce qui conduit à l'augmentation de la pression à l'intérieur du réservoir les contenant.

En l'absence de dispositif régulant de manière satisfaisante la pression à l'intérieur d'un réservoir de stockage de ce type de carburant, il est courant de dimensionner le réservoir afin qu'il puisse absorber des variations importantes de pression. Ceci conduit à augmenter l'épaisseur de ses parois et donc à l'alourdir et à se limiter généralement à un réservoir cylindrique ou sphérique.

Or, une problématique constante dans le domaine de l'aéronautique est de diminuer au maximum le poids des équipements contenus dans un aéronef. De plus, pour des raisons de localisation des réservoirs, il pourrait être intéressant que ceux-ci présentent des formes autres que cylindriques ou sphériques.

On connaît déjà d'après le document US 2014/174106, un dispositif de régulation de la pression à l'intérieur d'un réservoir embarqué de stockage d'un carburant cryogénique, ce carburant étant destiné à alimenter la chambre de combustion d'une turbomachine d'aéronef.

Ce dispositif comprend une canalisation de recirculation raccordant une pompe, située à la partie inférieure dudit réservoir embarqué, à la partie supérieure de ce réservoir et cette canalisation de recirculation est équipée d'une vanne de régulation, ainsi que d'un échangeur de chaleur qui permet de faire passer le carburant cryogénique de l'état liquide à l'état gazeux.

Ce dispositif comprend également une canalisation qui raccorde le réservoir à la chambre de combustion et une unité centrale de pilotage qui pilote l'ouverture ou la fermeture des différentes vannes de régulation et la mise en marche ou l'arrêt de la pompe.

Toutefois, ce document ne décrit ni ne suggère les autres caractéristiques de l'invention.

### EXPOSE DE L'INVENTION

L'invention a pour but de proposer un dispositif permettant de réguler la pression à l'intérieur d'un réservoir embarqué de stockage d'un carburant cryogénique, de façon à le maintenir dans une plage de pressions plus basse que ce qui existe dans la technique de l'art antérieur, de façon à ce qu'il ne soit pas nécessaire de renforcer la résistance mécanique de ce réservoir et donc de l'alourdir.

A cet effet, l'invention concerne un dispositif de régulation de la pression à l'intérieur d'un réservoir embarqué de stockage d'un carburant cryogénique, tel que du gaz naturel, dont une partie se trouve à l'état liquide et une autre partie à l'état gazeux, ce carburant cryogénique étant destiné à alimenter une chambre de combustion d'une turbomachine d'aéronef.

Conformément à l'invention, ce dispositif comprend :
- un réservoir embarqué de stockage et d'alimentation en carburant cryogénique de ladite chambre de combustion, ce réservoir comprenant une pompe de gavage, située à la partie inférieure dudit réservoir embarqué,
- une chambre de mélange, configurée pour être raccordée à ladite chambre de combustion,
- une première canalisation, raccordant ledit réservoir embarqué à ladite chambre de mélange, afin de permettre l'alimentation de cette dernière en carburant cryogénique à l'état liquide, cette première canalisation étant munie au moins d'une pompe de mise sous pression et d'une première vanne de régulation,
- une seconde canalisation raccordant ledit réservoir embarqué à ladite chambre de mélange, afin de permettre l'alimentation de cette dernière en carburant cryogénique à l'état gazeux, cette seconde canalisation étant munie au moins d'un compresseur et d'une première vanne de commande,
- une canalisation de recirculation raccordant ladite pompe de gavage, à la partie supérieure du réservoir, cette canalisation de recirculation étant équipée d'une deuxième vanne de régulation ainsi que d'un premier échangeur de chaleur qui permet de faire passer le carburant cryogénique de l'état liquide à l'état gazeux,
- un capteur de pression détectant la pression à l'intérieur dudit réservoir embarqué,
- une unité centrale de pilotage recevant des données de pression dudit capteur de pression et pilotant l'ouverture totale ou partielle ou la fermeture des différentes vannes de régulation et de la première vanne de commande et la mise en marche ou l'arrêt de la pompe de mise sous pression et de la pompe de gavage et du compresseur, en fonction de la valeur d'une pression de consigne à l'intérieur dudit réservoir embarqué.

Grâce à ces caractéristiques de l'invention, la pression à l'intérieur du réservoir embarqué est maintenue à une valeur plus basse que dans l'état de la technique. L'équilibre liquide/gaz est maintenu à basse pression et donc également à plus basse température, ce qui augmente la densité du liquide. Les dimensions du réservoir peuvent donc être réduites pour une même masse de carburant cryogénique embarqué.

De plus, la pression étant maintenue plus faible, il n'est plus nécessaire d'utiliser des renforts structurels sur le réservoir, ce qui garantit un gain de masse de celui-ci et une plus grande liberté dans le choix de sa forme.

Enfin, le mode de gestion de la pression permet d'avoir moins besoin de réchauffer le carburant cryogénique, avant son utilisation dans la chambre de combustion. Il n'est donc plus nécessaire d'apporter une source d'énergie additionnelle pour le réchauffer et un simple échange thermique avec des fluides chauds présents à l'intérieur de l'aéronef peut suffire.

Selon d'autres caractéristiques avantageuses et non limitatives de l'invention, prises seules ou en combinaison :
- le dispositif de régulation comprend un réservoir tampon disposé sur la canalisation de recirculation en aval du premier échangeur de chaleur et une deuxième vanne de commande disposée sur la canalisation de recirculation entre ledit réservoir tampon et la partie supérieure du réservoir de stockage embarqué, en ce qu'une première vanne à trois voies est disposée sur ladite seconde canalisation de sorte que sa voie d'entrée soit raccordée en aval du compresseur, que l'une de ses voies de sortie soit raccordée à ladite chambre de mélange et que son autre voie de sortie soit raccordée audit réservoir tampon par une canalisation de dérivation, cette deuxième vanne de commande et cette première vanne à trois voies étant pilotées par ladite unité centrale de pilotage, et en ce que ladite première vanne à trois voies peut être mise soit dans une première position, dans laquelle elle raccorde le réservoir exclusivement à la chambre de mélange, soit dans une seconde position, dans laquelle elle raccorde le réservoir exclusivement au réservoir tampon pour permettre le remplissage de celui-ci en carburant cryogénique à l'état gazeux, comprimé par le compresseur, soit dans une pluralité de positions intermédiaires, dans laquelle elle raccorde le réservoir à la fois à la chambre de mélange et au réservoir tampon, en laissant passer un débit plus ou moins important vers l'une ou vers l'autre, en fonction de la position intermédiaire dans laquelle se trouve ;
- un deuxième échangeur de chaleur est disposé sur la première canalisation, entre la première vanne de régulation et la chambre de mélange pour vaporiser le carburant cryogénique liquide avant son entrée dans la chambre de mélange ;
- la première vanne de régulation et la deuxième vanne de régulation sont une seule et unique deuxième vanne à trois voies, qui est disposée sur ladite première canalisation, en aval de la pompe de mise sous pression, de sorte que sa voie d'entrée soit raccordée à cette pompe de mise sous pression, que l'une de ses voies de sortie soit raccordée à ladite chambre de mélange et que son autre voie de sortie soit raccordée à la canalisation de recirculation en amont du premier échangeur de chaleur, et en ce que cette deuxième vanne à trois voies est pilotée par ladite unité centrale de pilotage pour être mise soit dans une première position, dans laquelle elle raccorde le réservoir exclusivement à la chambre de mélange, soit dans une seconde position, dans laquelle elle raccorde le réservoir exclusivement au premier échangeur de chaleur, soit dans une pluralité de positions intermédiaires, dans lesquelles elle raccorde le réservoir à la fois à la chambre de mélange et au premier échangeur de chaleur, en laissant passer un débit plus ou moins important vers l'une ou vers l'autre, en fonction de la position intermédiaire dans laquelle elle se trouve ;

- le dispositif comprend une soupape disposée à la partie supérieure dudit réservoir embarqué, tarée à une pression de sécurité, supérieure à la pression atmosphérique et à ladite pression de consigne et qui permet de libérer du carburant cryogénique à l'état gazeux, hors dudit réservoir embarqué, si la pression à l'intérieur de ce dernier dépasse ladite pression de sécurité ;
- qu'au moins l'un des échangeurs parmi le premier échangeur de chaleur et le deuxième échangeur de chaleur est un échangeur carburant cryogénique/fluide chaud de l'aéronef, ce fluide chaud étant choisi parmi de l'air provenant de l'extérieur de l'aéronef, de la cabine ou de l'échappement d'une turbine à gaz ;
- le dispositif comprend une canalisation d'évacuation de gaz débouchant à la partie supérieure dudit réservoir embarqué et qui raccorde ce réservoir embarqué à un raccord de sortie de l'aéronef débouchant à l'extérieur de l'aéronef, cette canalisation d'évacuation de gaz étant munie d'une vanne de contrôle dont l'ouverture et la fermeture sont pilotées par ladite unité centrale de pilotage, ce raccord de sortie de l'aéronef étant configuré pour pouvoir être raccordé, via une canalisation d'aspiration, à un dispositif d'aspiration de gaz ;
- le dispositif comprend un dispositif de pulvérisation de carburant cryogénique à l'état liquide, disposé à l'intérieur dudit réservoir embarqué, dans la partie supérieure de celui-ci, ce dispositif de pulvérisation étant raccordé à une canalisation d'amenée de liquide", munie d'un raccord d'entrée de l'aéronef débouchant à l'extérieur de l'aéronef, cette canalisation d'amenée de liquide étant munie d'une vanne de contrôle dont l'ouverture et la fermeture sont pilotées par ladite unité centrale de pilotage, ce raccord d'entrée de l'aéronef étant configuré pour pouvoir être raccordé, via une canalisation d'introduction, à un dispositif de pompage et à un réservoir externe, de stockage de carburant cryogénique d'un aéroport, pour alimenter ledit dispositif de pulvérisation en carburant cryogénique à l'état liquide ;
- le dispositif comprend une canalisation de remplissage, qui débouche à la partie inférieure dudit réservoir embarqué, cette canalisation de remplissage étant munie d'une vanne de contrôle dont l'ouverture et la fermeture sont pilotées par ladite unité centrale de pilotage, cette canalisation de remplissage étant également munie d'un raccord d'entrée débouchant à l'extérieur de l'aéronef, ce raccord d'entrée étant configuré pour pouvoir être raccordé, via une canalisation d'introduction, à un dispositif de pompage et à un réservoir externe de stockage de carburant cryogénique d'un aéroport, pour alimenter ledit réservoir embarqué en carburant cryogénique à l'état liquide.

L'invention concerne également un aéronef comprenant au moins un réservoir embarqué de stockage de carburant cryogénique, tel que du gaz naturel, et au moins une turbomachine munie d'une chambre de combustion fonctionnant audit carburant cryogénique à l'état liquide et à l'état gazeux. Conformément à l'invention, cet aéronef comprend un dispositif de régulation de la pression, tel que précité.

L'invention concerne également un ensemble de régulation de la pression à l'intérieur d'un réservoir embarqué de stockage de carburant cryogénique, tel que du gaz naturel, à l'état liquide ou gazeux.

Conformément à l'invention, cet ensemble comprend :
- un aéronef et une installation aéroportuaire,

en ce que l'aéronef comprend ledit réservoir embarqué et au moins une turbomachine munie d'une chambre de combustion alimentée avec ledit carburant cryogénique et un dispositif de régulation de la pression précité.
et en ce que l'installation aéroportuaire comprend au moins un réservoir de stockage externe de carburant cryogénique, au moins une canalisation d'aspiration et/ou au moins une canalisation d'introduction, ladite canalisation d'aspiration étant munie d'un dispositif d'aspiration de gaz et étant raccordée à un raccord d'aspiration configuré pour pouvoir être raccordé au raccord de sortie de l'aéronef, ladite canalisation d'introduction étant munie d'un dispositif de pompage et étant raccordée audit réservoir externe et à un raccord d'introduction configuré pour pouvoir être raccordé au raccord d'entrée de l'aéronef.

L'invention concerne également un procédé de régulation de la pression à l'intérieur d'un réservoir embarqué de stockage de carburant cryogénique, tel que du gaz naturel, à l'état liquide ou gazeux, ce réservoir embarqué se trouvant à l'intérieur d'un aéronef et cet aéronef comprenant un dispositif de régulation de la pression tel que précité, ce carburant cryogénique alimentant la chambre de combustion d'une turbomachine dudit aéronef.

Conformément à l'invention, ce procédé comprend les étapes consistant à :
- détecter la pression à l'intérieur dudit réservoir embarqué à l'aide dudit capteur de pression, - comparer cette pression à la pression de consigne,
- et lorsque la pression dans le réservoir embarqué est inférieure à la pression de consigne, ouvrir la deuxième vanne de régulation et éventuellement la deuxième vanne de commande de la canalisation de recirculation et mettre en marche la pompe de gavage, de façon à transformer le carburant cryogénique liquide en carburant cryogénique gazeux dans le premier échangeur de chaleur et à le réinjecter dans la partie supérieure du réservoir embarqué.

De façon avantageuse, ce procédé comprend les étapes consistant à :
- détecter la pression à l'intérieur dudit réservoir embarqué à l'aide dudit capteur de pression,
- comparer cette pression à la pression de consigne,
- et lorsque la pression dans le réservoir embarqué est inférieure à la pression de consigne, ouvrir la deuxième vanne de commande pour transférer le carburant cryogénique gazeux comprimé contenu dans ledit réservoir tampon vers ledit réservoir embarqué jusqu'à ce que la pression à l'intérieur de ce réservoir embarqué soit égal à la pression de consigne ;

De préférence, ce procédé est mis en oeuvre avec l'ensemble précité et il comprend les étapes consistant, alors que l'aéronef est à l'arrêt et est raccordé à l'installation aéroportuaire, à :
- détecter la pression à l'intérieur dudit réservoir embarqué à l'aide dudit capteur de pression,
- comparer cette pression à la pression de consigne,
- si la pression dans le réservoir embarqué est inférieure à la pression de consigne, ouvrir la vanne de contrôle de la canalisation d'amenée de liquide et mettre en marche le dispositif de pompage de l'installation aéroportuaire pour aspirer du carburant cryogénique à l'état liquide depuis le réservoir externe et l'introduire dans ledit réservoir embarqué et si la pression dans le réservoir embarqué est supérieure à la pression de consigne, ouvrir la vanne de contrôle de la canalisation d'évacuation de gaz et mettre en marche le dispositif d'aspiration de gaz de l'installation aéroportuaire pour aspirer du carburant cryogénique à l'état gazeux se trouvant dans ledit réservoir embarqué.

On notera qu'en pratique, cette situation arrive très peu souvent car lorsque l'aéronef est à l'arrêt, ses moteurs sont éteints et le gaz n'est pas consommé.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig.1] est un schéma représentant un premier mode de réalisation d'un ensemble de régulation de la pression à l'intérieur d'un réservoir embarqué de stockage de carburant cryogénique, ce carburant alimentant la chambre de combustion d'une turbomachine d'aéronef.
[Fig. 2] est un schéma représentant un second mode de réalisation de l'ensemble précité.
[Fig. 3] est un schéma représentant un positionnement possible du réservoir embarqué de stockage de carburant cryogénique, à l'extérieur du fuselage d'un avion.

Sur l'ensemble des figures, les mêmes éléments portent des références identiques.

### DESCRIPTION DETAILLEE DE L'INVENTION

Il est connu de l'état de la technique d'avoir un aéronef 1, muni d'une turbomachine dont la chambre de combustion 10 est alimenté par un carburant cryogénique, tel que du gaz naturel.

Conformément à l'invention, cet aéronef 1 comprend un dispositif de régulation 2 de la pression régnant à l'intérieur d'un réservoir de stockage embarqué 3 dudit carburant cryogénique. Ce carburant cryogénique s'y trouve en partie à l'état liquide (en partie basse du réservoir) et en partie à l'état gazeux, lorsque le liquide s'est vaporisé suite au changement de phase (il s'accumule alors en partie haute du réservoir).

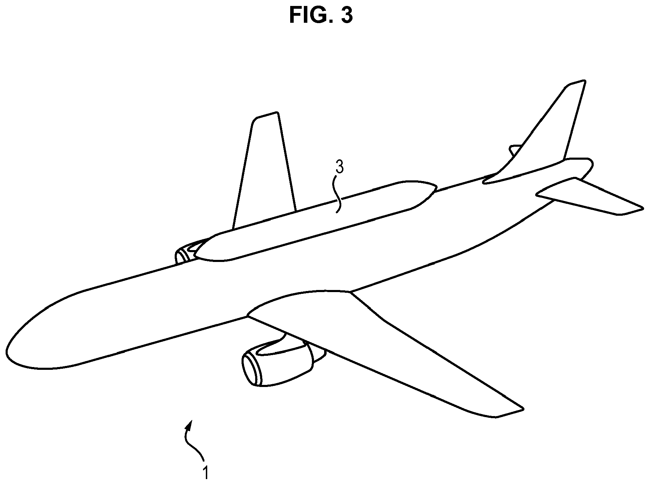

Par « réservoir embarqué », on entend un réservoir configuré pour pouvoir être embarqué dans un aéronef, voire fixé à l'extérieur de l'aéronef 1 (comme représenté en figure 3) et ce, en respectant les normes de sécurité.

Le dispositif de régulation de la pression 2 conforme à l'invention comprend notamment :
- une première canalisation 41 raccordant le réservoir embarqué 3,(notamment un raccord de piquage 31 situé en partie basse de celui-ci), à une chambre de mélange 100, afin de permettre l'alimentation de cette dernière en carburant cryogénique à l'état liquide,
- une seconde canalisation 42 raccordant ledit réservoir embarqué 3, (notamment un raccord de piquage 32 situé en partie haute de celui-ci), à la chambre de mélange 100, afin de permettre l'alimentation de cette dernière en carburant cryogénique à l'état gazeux,
- une canalisation de recirculation 43 raccordant la partie inférieure du réservoir 3 à sa partie supérieure, notamment à un raccord de piquage 33 situé en partie haute dudit réservoir embarqué 3.

De préférence, une pompe 35, telle qu'une pompe de gavage, est immergée à l'intérieur du réservoir 3. Elle est raccordée à la première canalisation 41 et permet d'introduire le débit souhaité de carburant à l'intérieur de cette canalisation, sans augmentation importante de pression dans cette canalisation.

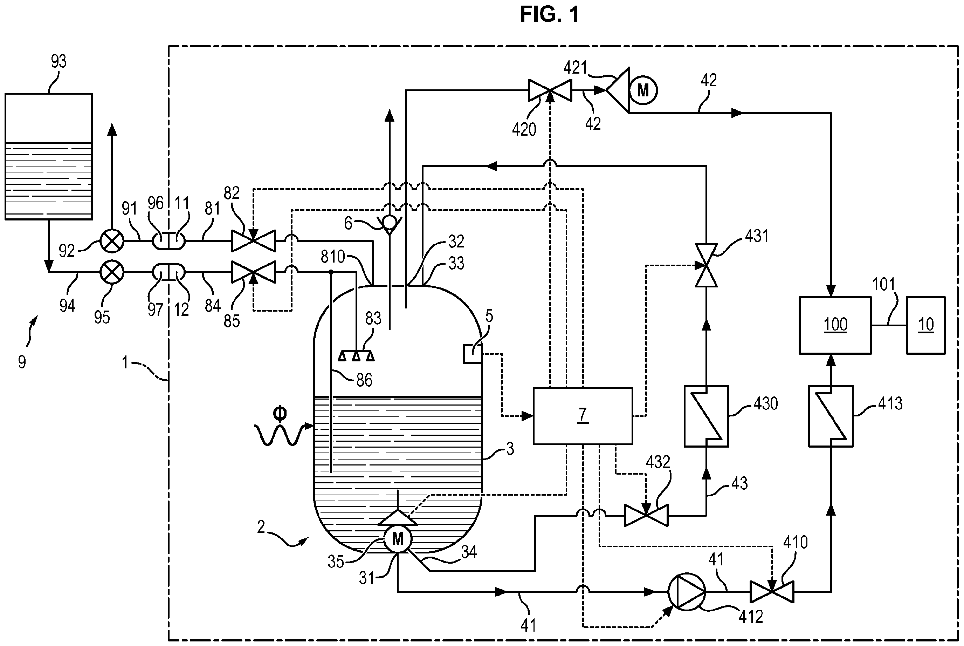

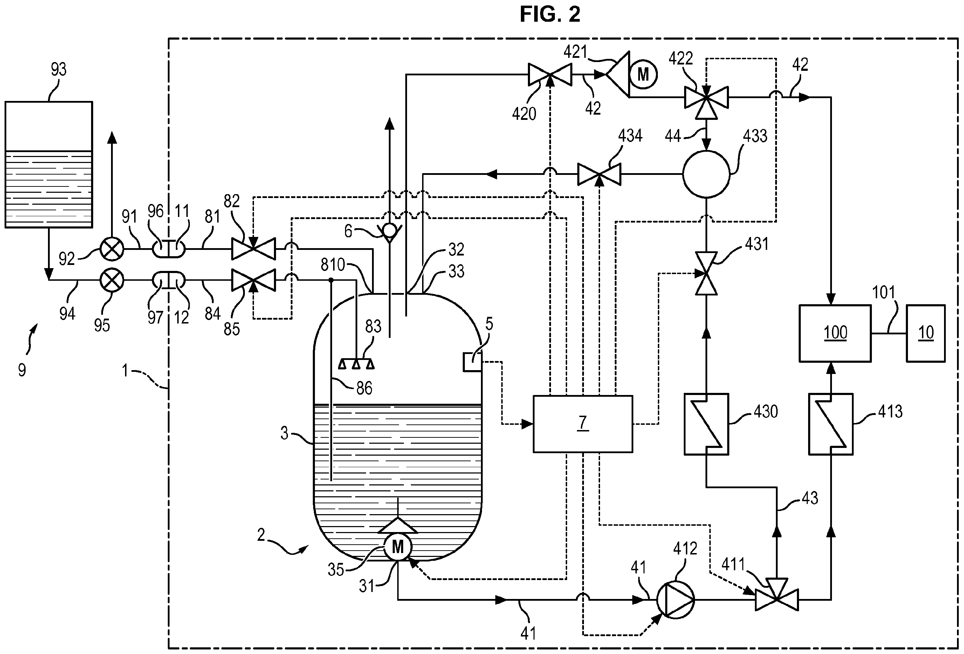

De préférence, la première canalisation 41 est en outre munie d'une pompe de mise sous pression 412, disposée en aval de la pompe de gavage 35 et en amont d'une première vanne dite « de régulation », par rapport au sens de circulation du carburant cryogénique liquide dans la canalisation 41. Dans le mode de réalisation représenté sur la figure 1, cette première vanne de régulation, est une vanne à 2 voies, référencée 410, et dans le mode de réalisation représenté sur la figure 2, cette première vanne de régulation, est une vanne à 3 voies, référencée 411. La pompe 412 permet d'augmenter la pression du carburant cryogénique liquide qui circule dans la première canalisation 41.

Enfin, pour des raisons de cohérence avec la terminologie employée dans les revendications, cette vanne à 3 voies 411 sera dénommée ci-après « deuxième vanne à 3 voies ».

La canalisation de recirculation 43 est équipée d'un premier échangeur de chaleur carburant cryogénique liquide/fluide de chaud de l'aéronef 430. Cet échangeur de chaleur 430 permet de faire changer d'état le carburant cryogénique liquide pour l'amener à l'état gazeux, en vue de le réintroduire en partie haute du réservoir 3.

En outre, de façon avantageuse, une vanne marche/arrêt 431 est disposée sur la canalisation de recirculation 43, en aval de l'échangeur de chaleur 430, pour autoriser ou non le passage du gaz vers le réservoir 3.

La canalisation 43 peut être raccordée :
- soit directement à la partie inférieure du réservoir 3 par un raccord de piquage 34 et elle est alors munie d'une deuxième vanne de régulation 432 tandis, que la première canalisation 41 est munie de la première vanne de régulation 410 (voir le mode de réalisation représenté sur la figure 1),
- soit à la deuxième vanne à trois voies 411 située sur la première canalisation 41, (voir le mode de réalisation représenté sur la figure 2). Cette deuxième vanne à 3 voies 411 remplace alors la première vanne de régulation et la deuxième vanne de régulation.

De façon optionnelle, un deuxième échangeur de chaleur carburant cryogénique liquide/fluide chaud de l'aéronef 413 est disposé entre la vanne 410 ou 411 et la chambre de mélange 100. Cet échangeur 413 permet de vaporiser le carburant liquide avant qu'il ne pénètre dans la chambre de mélange 100, qui ne contient alors que du carburant à l'état gazeux.

La vanne à trois voies 411 comprend une entrée raccordée à la pompe de mise sous pression 412 et deux sorties, raccordées respectivement au deuxième échangeur 413 (et donc à la chambre de mélange 100) et à la canalisation 43 de recirculation en amont de l'échangeur 430.

La deuxième vanne à 3 voies 411 peut occuper soit une première position, dans laquelle elle raccorde le réservoir 3 exclusivement à la chambre de mélange 100, soit une seconde position, dans laquelle elle raccorde le réservoir 3 exclusivement au premier échangeur de chaleur 430, soit une pluralité de positions intermédiaires, dans lesquels elle raccorde le réservoir 3 à la fois à la chambre de mélange 100 et au premier échangeur de chaleur 430, en laissant passer un débit plus ou moins important vers l'une ou vers l'autre, en fonction de la position intermédiaire dans laquelle elle se trouve.

De préférence, la seconde canalisation 42 est munie d'une première vanne de commande 420 (par exemple une vanne à 2 voies), disposée en aval du réservoir 3 et d'un compresseur 421, disposé en aval de ladite vanne 420, par rapport au sens de circulation du carburant cryogénique gazeux dans la seconde canalisation 42.

Parmi les différents fluides de chauds de l'aéronef susceptibles d'être utilisés dans les échangeurs de chaleur 413 ou 430, on peut citer par exemple de l'air provenant de l'extérieur de l'aéronef (et qui se trouve à une température supérieure à celle du carburant cryogénique), de l'air provenant de la cabine ou encore de l'échappement d'une turbine à gaz.

La chambre de mélange 100, qui reçoit le mélange des carburants cryogéniques dans les deux états liquide et gazeux provenant des deux canalisations 41 et 42, est raccordée à la chambre de combustion 10 par une canalisation 101. Un injecteur (non représenté sur la figure), disposé à l'entrée de la chambre de combustion 10 permet d'introduire le carburant cryogénique à l'état gazeux, à l'intérieur de la chambre de combustion 10.

Au moins un capteur de pression 5 est disposé à l'intérieur du réservoir 3, afin de détecter la pression régnant à l'intérieur de celui -ci. Ce capteur est disposé en partie supérieure du réservoir 3, au-dessus du niveau de carburant à l'état liquide.

De façon avantageuse, le réservoir embarqué 3 comprend également une soupape de sécurité 6, disposée dans sa partie supérieure. Cette soupape est tarée à une pression de sécurité qui est à la fois supérieure à la pression atmosphérique et supérieure à une pression de consigne. Elle a pour fonction de libérer le carburant cryogénique à l'état gazeux, hors de ce réservoir embarqué 3, si la pression à l'intérieur de ce dernier dépasse ladite pression de sécurité.

Selon une première variante de réalisation simplifiée de l'invention, représentée sur la figure 1, la canalisation de recirculation 43 est raccordée directement au raccord de piquage 33, en aval de la vanne marche/arrêt431.

Selon une seconde variante de réalisation de l'invention, représentée sur la figure 2, la canalisation de recirculation 43 est raccordée au raccord de piquage 33, via un réservoir tampon de gaz 433 (ou « capacité »), situé en aval de la vanne marche/arrêt 431. Ce réservoir tampon 432 contient du gaz à une pression plus élevée que la pression régnant dans le réservoir embarqué 3. Il sert à maintenir en pression ce réservoir 3.

Dans ce cas, une deuxième vanne de commande 434 est disposée sur la canalisation de recirculation 43, en aval dudit réservoir tampon 433. Enfin, une vanne à trois voies 422 (dénommée ci-après première vanne à 3 voies) est disposée sur la seconde canalisation 42, en aval du compresseur 421. Elle comprend une voie d'entrée raccordée au compresseur 421 et deux voies de sortie, raccordées respectivement à la chambre de mélange 100 et audit réservoir tampon 433, par une canalisation de dérivation 44. La vanne 422 peut occuper soit une première position, dans laquelle elle raccorde le réservoir 3 exclusivement à la chambre de mélange 100, soit une seconde position, dans laquelle elle raccorde le réservoir 3 exclusivement au réservoir tampon 433, soit une pluralité de positions intermédiaires, dans laquelle elle raccorde le réservoir 3 à la fois à la chambre de mélange 100 et au réservoir tampon 433, en laissant passer un débit plus ou moins important vers l'une ou vers l'autre, en fonction de la position intermédiaire dans laquelle se trouve.

Enfin et bien que cela ne soit pas représenté sur les figures, on notera qu'il est possible d'avoir le réservoir tampon 433, comme sur la figure 2, mais que la canalisation de recirculation 43 soit raccordée avec les raccordements et les vannes 432, 410 comme sur la figure 1.

Au moins une unité centrale 7, telle qu'un ordinateur ou un processeur, reçoit des informations notamment du capteur de pression 5 et pilote le fonctionnement des vannes 410, 431, 432, 434 et 420, le fonctionnement des vannes à trois voies 411 et 422, le fonctionnement marche/arrêt de la pompe de gavage 35 et de la pompe de mise sous pression 412 et le fonctionnement marche/arrêt du compresseur 421, en fonction de ces informations et comme expliqué ci-après.

A cet effet, l'ordinateur comprend une mémoire dans laquelle est stocké un programme d'ordinateur, ce programme comprenant des instructions de code qui permettent à une machine de mettre en oeuvre ces étapes de procédé.

Le réservoir tampon 433 peut être alimenté de deux façons.

Lorsque la deuxième vanne à trois voies 411 est dans la première position (ou que la première vanne de régulation 410 est ouverte et que la deuxième vanne de régulation 432 est fermée), par exemple au décollage de l'aéronef et que la chambre de mélange 100 est alimentée par du carburant liquide, alors la première vanne à trois voies 422 est placée dans la seconde position et le réservoir tampon 433 est alimenté avec du carburant cryogénique gazeux issu de la partie supérieure du réservoir 3, puis compressé par le compresseur 421 et introduit via la canalisation de dérivation 44. Pendant ce temps, la deuxième vanne de commande 434 est fermée.

Inversement dans le cas où le débit de carburant à l'état gazeux c'est-à-dire évaporé (en anglais « boil-off ») suffit à alimenter la chambre de mélange 100, la première vanne à 3 voies 422 est placée dans la première position. Toutefois, elle peut également être placée dans une position intermédiaire et alors le réservoir tampon 433 est alimenté par le carburant gazeux sortant du compresseur 421, la vanne 434 étant fermée.

Le réservoir tampon 433 est rempli notamment lorsque sa pression interne devient inférieure à une pression de seuil prédéterminée, qui est elle-même supérieure à la pression de travail du réservoir 3.

Le réservoir tampon 433 est dimensionné de manière à pouvoir assurer le maintien de la pression dans le réservoir 3, le temps que la canalisation de recirculation 43 soit alimentée en carburant liquide et que l'évaporateur 430 commence à produire du gaz. Le temps de réponse pour réguler la pression dans le réservoir 3 est ainsi raccourci, par rapport à la première variante de réalisation, sans ce réservoir tampon 433.

Le fonctionnement du dispositif de régulation 2 est le suivant :
Tant que le capteur de pression 5 renvoie à l'unité centrale 7, l'information selon laquelle la pression à l'intérieur du réservoir embarqué 3 est égale à une pression de consigne ou est comprise dans une plage de valeurs de consigne, l'unité centrale 7 ferme les vannes 431, 432 et/ou pilote les vannes à trois voies 411 et 422 (suivant la variante de réalisation), de façon que ni la canalisation de recirculation 43, ni le réservoir tampon 433 (s'il est présent) ne soient raccordés aux canalisations 41 et 42 et par ailleurs, pilote les pompes 35 et 412 ainsi que la vanne 420 et le compresseur 421, de façon que la chambre de mélange 100 soit alimentée en carburant cryogénique liquide et en carburant cryogénique gazeux, selon des proportions résultant des besoins de l'aéronef 1, en fonction de sa phase de vol.

Si la pression dans le réservoir embarqué 3, détectée par le capteur de pression 5, est inférieure à la pression de consigne (ou inférieure à la borne inférieure de la plage de valeurs de consigne), et tant qu'elle le reste, la deuxième vanne de régulation 432 est ouverte ou la deuxième vanne à trois voies 411 est mise dans la seconde position, la deuxième vanne de commande 434 (si elle est présente) est ouverte et le carburant cryogénique liquide traverse l'échangeur de chaleur 430, change de phase et est renvoyé à l'état gazeux dans la partie supérieure du réservoir 3. Cette arrivée de gaz provoque une augmentation de la pression dans le réservoir 3. Si le réservoir tampon 433 est présent, il joue le rôle expliqué précédemment.

Inversement, si la pression détectée par le capteur de pression 5 est supérieure à la pression de consigne ou supérieure à la borne supérieure de la plage de valeurs de consigne, alors le débit de gaz prélevé sur la seconde canalisation 42 est augmenté par accélération du compresseur 421 (la vanne 420 est donc ouverte ) et le débit liquide circulant dans la première canalisation 41 est diminué en pilotant les vannes 410 ou 411 pour que le débit de carburant cryogénique (liquide et gazeux) arrivant au moteur corresponde toujours aux besoins moteur.

Enfin, si la pression dans le réservoir 3 devient supérieure à la pression de sécurité, alors la soupape 6 s'ouvre et libère du gaz à l'extérieur du réservoir 3 pour ramener la pression dans celui-ci sous cette valeur de pression de sécurité.

Le dispositif de régulation de la pression 2, conforme à l'invention, peut avantageusement être complété par une installation additionnelle qui permet de réguler la pression à l'intérieur du réservoir embarqué 3, pendant une phase où l'aéronef 1 est au sol et en stationnement, par exemple la nuit.

A cet effet, ce dispositif 2 comprend une canalisation 81 d'évacuation des gaz débouchant à la partie supérieure du réservoir 3, au niveau d'un raccord de piquage 810. Elle permet de raccorder le réservoir 3 à un raccord de sortie 11 de l'aéronef débouchant à l'extérieur de celui-ci. Cette canalisation d'évacuation 81 est munie d'une vanne de contrôle 82, dont l'ouverture et la fermeture sont pilotées par ladite unité centrale de pilotage 7.

En outre, ce raccord de sortie 11 est configuré pour pouvoir être raccordé via une canalisation 91 d'aspiration, à un dispositif d'aspiration 92 de gaz, qui permet d'extraire le gaz et de l'envoyer par exemple, vers un dispositif de reliquéfaction installé dans l'aéroport.

La canalisation d'aspiration 91 peut par exemple être raccordée au raccord 11, par un raccord 96.

De façon avantageuse, le dispositif de régulation de la pression 2 comprend également un dispositif 83 de pulvérisation de carburant cryogénique à l'état liquide, disposé à l'intérieur du réservoir embarqué 3, dans la partie supérieure de celui-ci. Ce dispositif de pulvérisation 83 est raccordé à une canalisation 84 d'amenée de liquide, munie d'un raccord d'entrée 12 débouchant à l'extérieur de l'aéronef 1. La canalisation 84 est munie d'une vanne de contrôle 85 dont l"ouverture et la fermeture sont pilotées par l'unité centrale de pilotage 7.

Le dispositif de pulvérisation 83 est utilisé de préférence lorsque le réservoir 3 est chaud. Le gaz accumulé en partie supérieure de celui-ci est alors également chaud et favorise la vaporisation du liquide pulvérisé via le dispositif 83. Ce dispositif de pulvérisation permet également d'uniformiser le remplissage de liquide et d'éviter de créer un point froid sur la structure du réservoir 3, ce qui le fragiliserait.

Le raccord d'entrée 12 est configuré pour pouvoir être raccordé via une canalisation d'introduction 94, à un réservoir externe 93 de stockage de carburant cryogénique d'un aéroport, afin d'alimenter le dispositif 83 en carburant à l'état liquide.

La canalisation d'introduction 94 est munie d'un dispositif de pompage 95 et d'un raccord 97, configuré pour pouvoir être appareillés avec le raccord d'entrée 12.

Enfin, le réservoir embarqué 3 peut également être muni d'une canalisation 86 de remplissage de liquide qui débouche dans sa partie basse, cette canalisation 86 pouvant être soit raccordée à la canalisation 84, en aval de la vanne 85, soit déboucher sur un raccord d'entrée de l'aéronef, non représenté sur les figures.

Grâce à cette installation additionnelle, lorsque l'aéronef 1 est à l'arrêt, les canalisations d'aspiration 91 et d'introduction 94 sont raccordées à l'aéronef 1 et si le capteur de pression 5 détecte que la pression dans le réservoir 3 est inférieure à la pression de consigne (ou inférieure à la borne inférieure de la plage de valeurs de consigne), et tant qu'elle le reste, l'unité centrale de pilotage 7 maintient les vannes 420, 432, 410 et 411 fermées ( ces vannes sont en permanences fermées si les moteurs ne sont pas allumés et que l'avion est connecté à l'aéroport, sauf possiblement la 432 qui peut être utilisée pour faire remonter la pression). Par ailleurs, l'unité 7 commande l'ouverture de la vanne de contrôle 85, ainsi que la mise en marche du dispositif de pompage 95, de façon à aspirer le carburant cryogénique qui se trouve dans le réservoir externe 93 et à l'introduire dans le réservoir embarqué 3.

Par ailleurs, si la pression détectée dans le réservoir 3 par le capteur 5 excède la pression de consigne ou la borne supérieure de la plage de valeurs de consigne, alors l'unité centrale de pilotage 7 ouvre la vanne de contrôle 82 et met en marche le dispositif d'aspiration de gaz 92, de sorte que le carburant cryogénique gazeux est évacué vers l'installation aéroportuaire.

Par ailleurs, comme précédemment décrit si la pression dans le réservoir 3 devient supérieure à la pression de sécurité, alors la soupape 6 s'ouvre.

Enfin, lorsque le niveau de carburant liquide descend en dessous d'un seuil prédéterminé, (mesuré par un capteur), du carburant est ajouté dans le réservoir.

Le dispositif de pulvérisation 83 est utilisé quand le réservoir est « chaud » (c'est-à-dire à température ambiante, et qu'il n'y a alors pas de liquide cryogénique dans le réservoir 3). Ce dispositif de pulvérisation 83 permet avec la pulvérisation de gouttelettes de ne pas créer de chocs thermiques sur le métal du réservoir 3, ce qui se produirait si on versait directement le débit à l'aide de la canalisation 86. Si le réservoir embarqué 3 est déjà en « froid », on utilise alors la canalisation 86 qui a un débit plus élevé.

## Revendications

1. Dispositif (2) de régulation de la pression à l'intérieur d'un réservoir embarqué de stockage d'un carburant cryogénique, tel que du gaz naturel, dont une partie se trouve à l'état liquide et une autre partie à l'état gazeux, ce carburant cryogénique étant destiné à alimenter une chambre de combustion (10) d'une turbomachine d'aéronef (1), **caractérisé en ce qu'**il comprend :
- un réservoir embarqué (3) de stockage et d'alimentation en carburant cryogénique de ladite chambre de combustion (10), ce réservoir (3) comprenant une pompe de gavage (35), située à la partie inférieure dudit réservoir embarqué (3),
- une chambre de mélange (100), configurée pour être raccordée à ladite chambre de combustion (10),
- une première canalisation (41), raccordant ledit réservoir embarqué (3) à ladite chambre de mélange (100), afin de permettre l'alimentation de cette dernière en carburant cryogénique à l'état liquide, cette première canalisation (41) étant munie au moins d'une pompe de mise sous pression (412) et d'une première vanne de régulation (410, 411),
- une seconde canalisation (42) raccordant ledit réservoir embarqué (3) à ladite chambre de mélange (100), afin de permettre l'alimentation de cette dernière en carburant cryogénique à l'état gazeux, cette seconde canalisation (42) étant munie au moins d'un compresseur (421) et d'une première vanne de commande(420),
- une canalisation de recirculation (43) raccordant ladite pompe de gavage (35) à la partie supérieure du réservoir (3), cette canalisation de recirculation (43) étant équipée d'une deuxième vanne de régulation (432, 411) ainsi que d'un premier échangeur de chaleur (430) qui permet de faire passer le carburant cryogénique de l'état liquide à l'état gazeux,
- un capteur de pression (5) détectant la pression à l'intérieur dudit réservoir embarqué (3),
- une unité centrale de pilotage (7) recevant des données de pression dudit capteur de pression (5) et pilotant l'ouverture totale ou partielle ou la fermeture des différentes vannes de régulation (410, 411, 432) et de la première vanne de commande (420) et la mise en marche ou l'arrêt de la pompe de mise sous pression (412), de la pompe de gavage (35) et du compresseur (421), en fonction de la valeur d'une pression de consigne à l'intérieur dudit réservoir embarqué (3).

2. Dispositif de régulation de la pression selon la revendication 1, **caractérisé en ce qu'**il comprend un réservoir tampon (433) disposé sur la canalisation de recirculation (43) en aval du premier échangeur de chaleur (430) et une deuxième vanne de commande (434) disposée sur la canalisation de recirculation (43) entre ledit réservoir tampon (433) et la partie supérieure du réservoir de stockage embarqué (3), **en ce qu'**une première vanne à trois voies (422) est disposée sur ladite seconde canalisation (42) de sorte que sa voie d'entrée soit raccordée en aval du compresseur (421), que l'une de ses voies de sortie soit raccordée à ladite chambre de mélange (100) et que son autre voie de sortie soit raccordée audit réservoir tampon (433) par une canalisation de dérivation (44), cette deuxième vanne de commande (434) et cette première vanne à trois voies (422) étant pilotées par ladite unité centrale de pilotage (7), et **en ce que** ladite première vanne à trois voies (422) peut être mise soit dans une première position, dans laquelle elle raccorde le réservoir (3) exclusivement à la chambre de mélange (100), soit dans une seconde position, dans laquelle elle raccorde le réservoir (3) exclusivement au réservoir tampon (433) pour permettre le remplissage de celui-ci en carburant cryogénique à l'état gazeux, comprimé par le compresseur (421), soit dans une pluralité de positions intermédiaires, dans laquelle elle raccorde le réservoir (3) à la fois à la chambre de mélange (100) et au réservoir tampon (433), en laissant passer un débit plus ou moins important vers l'une ou vers l'autre, en fonction de la position intermédiaire dans laquelle se trouve.

3. Dispositif de régulation de la pression selon la revendication 1 ou 2, **caractérisé en ce qu'**un deuxième échangeur de chaleur (413) est disposé sur la première canalisation (41), entre la première vanne de régulation (410, 411) et la chambre de mélange (100) pour vaporiser le carburant cryogénique liquide avant son entrée dans la chambre de mélange (100).

4. Dispositif de régulation de la pression selon l'une des revendications précédentes, **caractérisé en ce que** la première vanne de régulation et la deuxième vanne de régulation sont une seule et unique deuxième vanne à trois voies (411), qui est disposée sur ladite première canalisation (41), en aval de la pompe de mise sous pression (412), de sorte que sa voie d'entrée soit raccordée à cette pompe de mise sous pression (412), que l'une de ses voies de sortie soit raccordée à ladite chambre de mélange (100) et que son autre voie de sortie soit raccordée à la canalisation de recirculation (43) en amont du premier échangeur de chaleur (430), et **en ce que** cette deuxième vanne à trois voies (411) est pilotée par ladite unité centrale de pilotage (7) pour être mise soit dans une première position, dans laquelle elle raccorde le réservoir (3) exclusivement à la chambre de mélange (100), soit dans une seconde position, dans laquelle elle raccorde le réservoir (3) exclusivement au premier échangeur de chaleur (430), soit dans une pluralité de positions intermédiaires, dans lesquelles elle raccorde le réservoir (3) à la fois à la chambre de mélange (100) et au premier échangeur de chaleur (430), en laissant passer un débit plus ou moins important vers l'une ou vers l'autre, en fonction de la position intermédiaire dans laquelle elle se trouve.

5. Dispositif de régulation de la pression selon l'une des revendications précédentes, **caractérisé en ce qu'**il comprend une soupape (6) disposée à la partie supérieure dudit réservoir embarqué (3), tarée à une pression de sécurité, supérieure à la pression atmosphérique et à ladite pression de consigne et qui permet de libérer du carburant cryogénique à l'état gazeux, hors dudit réservoir embarqué (3), si la pression à l'intérieur de ce dernier dépasse ladite pression de sécurité.

6. Dispositif de régulation de la pression selon l'une des revendications précédentes, **caractérisé en ce qu'**au moins l'un des échangeurs parmi le premier échangeur de chaleur (430) et le deuxième échangeur de chaleur (413) est un échangeur carburant cryogénique/fluide chaud de l'aéronef, ce fluide chaud étant choisi parmi de l'air provenant de l'extérieur de l'aéronef, de la cabine ou de l'échappement d'une turbine à gaz.

7. Dispositif de régulation de la pression selon l'une des revendications précédentes, **caractérisé en ce qu'**il comprend une canalisation (81) d'évacuation de gaz débouchant à la partie supérieure dudit réservoir embarqué (3) et qui raccorde ce réservoir embarqué à un raccord de sortie de l'aéronef (11) débouchant à l'extérieur de l'aéronef (1), cette canalisation d'évacuation de gaz (81) étant munie d'une vanne de contrôle (82) dont l'ouverture et la fermeture sont pilotées par ladite unité centrale de pilotage (7), ce raccord de sortie de l'aéronef (11) étant configuré pour pouvoir être raccordé, via une canalisation d'aspiration (91), à un dispositif d'aspiration (92) de gaz.

8. Dispositif de régulation de la pression selon l'une des revendications précédentes, **caractérisé en ce qu'**il comprend un dispositif (83) de pulvérisation de carburant cryogénique à l'état liquide, disposé à l'intérieur dudit réservoir embarqué (3), dans la partie supérieure de celui-ci, ce dispositif de pulvérisation (83) étant raccordé à une canalisation (84) d'amenée de liquide", munie d'un raccord d'entrée de l'aéronef (12) débouchant à l'extérieur de l'aéronef (1), cette canalisation d'amenée de liquide (84) étant munie d'une vanne de contrôle (85) dont l'ouverture et la fermeture sont pilotées par ladite unité centrale de pilotage (7), ce raccord d'entrée de l'aéronef (12) étant configuré pour pouvoir être raccordé, via une canalisation d'introduction (94), à un dispositif de pompage (95) et à un réservoir externe (93), de stockage de carburant cryogénique d'un aéroport, pour alimenter ledit dispositif de pulvérisation (83) en carburant cryogénique à l'état liquide.

9. Dispositif de régulation de la pression selon l'une des revendications précédentes, **caractérisé en ce qu'**il comprend une canalisation de remplissage (86), qui débouche à la partie inférieure dudit réservoir embarqué (3), cette canalisation de remplissage (86) étant munie d'une vanne de contrôle (85) dont l'ouverture et la fermeture sont pilotées par ladite unité centrale de pilotage (7), cette canalisation de remplissage (86) étant également munie d'un raccord d'entrée (12) débouchant à l'extérieur de l'aéronef (1), ce raccord d'entrée (12) étant configuré pour pouvoir être raccordé, via une canalisation d'introduction (94), à un dispositif de pompage (95) et à un réservoir externe (93), de stockage de carburant cryogénique d'un aéroport, pour alimenter ledit réservoir embarqué (3) en carburant cryogénique à l'état liquide.

10. Aéronef (1) comprenant au moins un réservoir embarqué de stockage de carburant cryogénique (3), tel que du gaz naturel, et au moins une turbomachine munie d'une chambre de combustion (10) fonctionnant audit carburant cryogénique à l'état liquide et à l'état gazeux, **caractérisé en ce qu'**il comprend un dispositif de régulation de la pression (2) conforme à l'une quelconque des revendications précédentes.

11. Ensemble de régulation de la pression à l'intérieur d'un réservoir embarqué (3) de stockage de carburant cryogénique, tel que du gaz naturel, à l'état liquide ou gazeux, **caractérisé en ce qu'**il comprend :
- un aéronef (1) et une installation aéroportuaire (9),
**en ce que** l'aéronef (1) comprend ledit réservoir embarqué (3) et au moins une turbomachine munie d'une chambre de combustion (10) alimentée avec ledit carburant cryogénique et un dispositif de régulation de la pression selon les revendications 7, 8 et 9,
et **en ce que** l'installation aéroportuaire (9) comprend au moins un réservoir de stockage externe (93) de carburant cryogénique, au moins une canalisation d'aspiration (91) et/ou au moins une canalisation d'introduction (94), ladite canalisation d'aspiration (91) étant munie d'un dispositif d'aspiration de gaz (92) et étant raccordée à un raccord d'aspiration (96) configuré pour pouvoir être raccordé au raccord de sortie (11) de l'aéronef, ladite canalisation d'introduction (94) étant munie d'un dispositif de pompage (95) et étant raccordée audit réservoir externe (93) et à un raccord d'introduction (97) configuré pour pouvoir être raccordé au raccord d'entrée (12) de l'aéronef.

12. Procédé de régulation de la pression à l'intérieur d'un réservoir embarqué (3) de stockage de carburant cryogénique, tel que du gaz naturel, à l'état liquide ou gazeux, ce réservoir embarqué (3) se trouvant à l'intérieur d'un aéronef (1) et cet aéronef (1) comprenant un dispositif de régulation de la pression selon l'une quelconque des revendications 1 à 9, ce carburant cryogénique alimentant la chambre de combustion (10) d'une turbomachine dudit aéronef, **caractérisé en ce qu'**il comprend les étapes consistant à :
- détecter la pression à l'intérieur dudit réservoir embarqué (3) à l'aide dudit capteur de pression (5),
- comparer cette pression à la pression de consigne,
- et lorsque la pression dans le réservoir embarqué (3) est inférieure à la pression de consigne, ouvrir la deuxième vanne de régulation (432, 411) et éventuellement la deuxième vanne de commande (434) de la canalisation de recirculation (43) et mettre en marche la pompe de gavage (35), de façon à transformer le carburant cryogénique liquide en carburant cryogénique gazeux dans le premier échangeur de chaleur (430) et à le réinjecter dans la partie supérieure du réservoir embarqué (3).

13. Procédé de régulation de la pression selon la revendication 12, ledit aéronef (1) comprenant un dispositif de régulation de la pression selon la revendication 2, **caractérisé en ce qu'**il comprend les étapes consistant à :
- détecter la pression à l'intérieur dudit réservoir embarqué (3) à l'aide dudit capteur de pression (5),
- comparer cette pression à la pression de consigne,
- et lorsque la pression dans le réservoir embarqué (3) est inférieure à la pression de consigne, ouvrir la deuxième vanne de commande (434) pour transférer le carburant cryogénique gazeux comprimé contenu dans ledit réservoir tampon (433) vers ledit réservoir embarqué (3) jusqu'à ce que la pression à l'intérieur de ce réservoir embarqué (3) soit égal à la pression de consigne.

14. Procédé selon la revendication 12 ou 13, **caractérisé en ce qu'**il est mis en oeuvre avec l'ensemble selon la revendication 11 et **en ce qu'**il comprend les étapes consistant, alors que l'aéronef (1) est à l'arrêt et est raccordé à l'installation aéroportuaire (9), à :
- détecter la pression à l'intérieur dudit réservoir embarqué (3) à l'aide dudit capteur de pression (5),
- comparer cette pression à la pression de consigne,
- si la pression dans le réservoir embarqué (3) est inférieure à la pression de consigne, ouvrir la vanne de contrôle (85) de la canalisation d'amenée de liquide (84) et mettre en marche le dispositif de pompage (95) de l'installation aéroportuaire (9) pour aspirer du carburant cryogénique à l'état liquide depuis le réservoir externe (93) et l'introduire dans ledit réservoir embarqué (3) et si la pression dans le réservoir embarqué (3) est supérieure à la pression de consigne, ouvrir la vanne de contrôle (82) de la canalisation d'évacuation de gaz (81) et mettre en marche le dispositif d'aspiration de gaz (92) de l'installation aéroportuaire (9) pour aspirer du carburant cryogénique à l'état gazeux se trouvant dans ledit réservoir embarqué (3).

## Patentansprüche

1. Vorrichtung (2) zur Regulierung des Drucks im Inneren eines eingebauten Tanks zur Lagerung eines kryogenen Kraftstoffs wie Erdgas, von dem sich ein Teil in flüssigem Zustand und ein anderer Teil in gasförmigem Zustand befindet, wobei dieser kryogene Kraftstoff bestimmt ist, eine Brennkammer (10) einer Turbomaschine eines Flugzeugs (1) zu versorgen, **dadurch gekennzeichnet, dass** sie umfasst:
- einen eingebauten Tank (3) zur Lagerung und Versorgung der Brennkammer (10) mit kryogenem Kraftstoff, wobei dieser Tank (3) eine Überförderungspumpe (35) umfasst, die sich im unteren Teil des eingebauten Tanks (3) befindet,
- eine Mischkammer (100), die dazu ausgelegt ist, mit der Brennkammer (10) verbunden zu sein,
- eine erste Leitung (41), die den eingebauten Tank (3) mit der Mischkammer (100) verbindet, um die Versorgung derselben mit kryogenem Kraftstoff in flüssigem Zustand zu gestatten, wobei diese erste Leitung (41) mit mindestens einer Druckbeaufschlagungspumpe (412) und mit einem ersten Regulierventil (410, 411) versehen ist,
- eine zweite Leitung (42), die den eingebauten Tank (3) mit der Mischkammer (100) verbindet, um die Versorgung derselben mit kryogenem Kraftstoff in gasförmigem Zustand zu gestatten, wobei diese zweite Leitung (42) mit mindestens einem Kompressor (421) und einem ersten Steuerventil (420) versehen ist,
- eine Rückführungsleitung (43), die die Überförderungspumpe (35) mit dem oberen Teil des Tanks (3) verbindet, wobei diese Rückführungsleitung (43) mit einem zweiten Regulierventil (432, 411) sowie einem ersten Wärmetauscher (430) ausgestattet ist, der gestattet, den kryogenen Kraftstoff aus dem flüssigen Zustand in den gasförmigen Zustand zu überführen,
- einen Drucksensor (5), der den Druck im Inneren des eingebauten Tanks (3) ermittelt,
- eine zentrale Steuerungseinheit (7), die Druckdaten von dem Drucksensor (5) empfängt und die vollständige oder teilweise Öffnung oder das Schließen der verschiedenen Regulierventile (410, 411, 432) und des ersten Steuerventils (420) und das Ingangsetzen oder Anhalten der Druckbeaufschlagungspumpe (412), der Überförderungspumpe (35) und des Kompressors (421) in Abhängigkeit von dem Wert eines Solldrucks im Inneren des eingebauten Tanks (3) steuert.

2. Vorrichtung zur Regulierung des Drucks nach Anspruch 1, **dadurch gekennzeichnet, dass** sie einen Puffertank (433) umfasst, der auf der Rückführungsleitung (43) nach dem ersten Wärmetauscher (430) angeordnet ist und ein zweites Steuerventil (434), das auf der Rückführungsleitung (43) zwischen dem Puffertank (433) und dem oberen Teil des eingebauten Lagertanks (3) angeordnet ist, und dass ein erstes Dreiwegeventil (422) auf der zweiten Leitung (42) derart angeordnet ist, dass sein Einlassweg nach dem Kompressor (421) verbunden ist, dass einer seiner Auslasswege mit der Mischkammer (100) verbunden ist und dass sein anderer Auslassweg mit dem Puffertank (433) durch eine Bypass-Leitung (44) verbunden ist, wobei dieses zweite Steuerventil (434) und dieses erste Dreiwegeventil (422) von der zentralen Steuerungseinheit (7) gesteuert werden, und dass das erste Dreiwegeventil (422) entweder in eine erste Position versetzbar ist, in welcher es den Tank (3) ausschließlich mit der Mischkammer (100) verbindet, oder in eine zweite Position, in welcher es den Tank (3) ausschließlich mit dem Puffertank (433) verbindet, um das Füllen desselben mit kryogenem Kraftstoff in gasförmigem Zustand zu gestatten, der von dem Kompressor (421) komprimiert ist, oder in eine Vielzahl von Übergangspositionen, in welcher es den Tank (3) sowohl mit der Mischkammer (100) als auch mit dem Puffertank (433) verbindet, wobei es einen mehr oder weniger großen Durchfluss zu der einen oder zu dem anderen in Abhängigkeit von der Übergangsposition, in der es sich befindet, hindurchlässt.

3. Vorrichtung zur Regulierung des Drucks nach Anspruch 1 oder 2, **dadurch gekennzeichnet, dass** ein zweiter Wärmetauscher (413) auf der ersten Leitung (41) zwischen dem ersten Regulierventil (410, 411) und der Mischkammer (100) angeordnet ist, um den flüssigen kryogenen Kraftstoff vor seinem Eintritt in die Mischkammer (100) zu sprühen.

4. Vorrichtung zur Regulierung des Drucks nach einem der vorangehenden Ansprüche, **dadurch gekennzeichnet, dass** das erste Regulierventil und das zweite Regulierventil ein einziges zweites Dreiwegeventil (411) sind, das auf der ersten Leitung (41) nach der Druckbeaufschlagungspumpe (412) derart angeordnet ist, dass sein Einlassweg mit dieser Druckbeaufschlagungspumpe (412) verbunden ist, dass einer seiner Auslasswege mit der Mischkammer (100) verbunden ist und dass sein anderer Auslassweg mit der Rückführungsleitung (43) vor dem ersten Wärmetauscher (430) verbunden ist, und dass dieses zweite Dreiwegeventil (411) von der zentralen Steuerungseinheit (7) gesteuert wird, um entweder in eine erste Position versetzt zu werden, in welcher es den Tank (3) ausschließlich mit der Mischkammer (100) verbindet, oder in eine zweite Position, in welcher es den Tank (3) ausschließlich mit dem ersten Wärmetauscher (430) verbindet, oder in eine Vielzahl von Übergangspositionen, in welchen es den Tank (3) sowohl mit der Mischkammer (100) als auch mit dem ersten Wärmetauscher (430) verbindet, wobei es einen mehr oder weniger großen Durchfluss zu der einen oder zu dem anderen in Abhängigkeit von der Übergangsposition, in der es sich befindet, hindurchlässt.

5. Vorrichtung zur Regulierung des Drucks nach einem der vorangehenden Ansprüche, **dadurch gekennzeichnet, dass** sie ein Ventil (6) umfasst, das im oberen Teil des eingebauten Tanks (3) angeordnet ist, das auf einen Sicherheitsdruck über dem atmosphärischen Druck und dem Solldruck tariert ist und das gestattet, kryogenen Kraftstoff in gasförmigem Zustand aus dem eingebauten Tank (3) freizusetzen, wenn der Druck im Inneren desselben den Sicherheitsdruck überschreitet.

6. Vorrichtung zur Regulierung des Drucks nach einem der vorangehenden Ansprüche, **dadurch gekennzeichnet, dass** mindestens einer der Tauscher von dem ersten Wärmetauscher (430) und dem zweiten Wärmetauscher (413) ein Tauscher kryogener Kraftstoff/warmes Fluid des Flugzeugs ist, wobei dieses warme Fluid aus der Luft, die von außerhalb des Flugzeugs, aus der Kabine oder aus dem Auslass einer Gasturbine kommt, ausgewählt ist.

7. Vorrichtung zur Regulierung des Drucks nach einem der vorangehenden Ansprüche, **dadurch gekennzeichnet, dass** sie eine Leitung (81) zur Ableitung von Gas umfasst, die im oberen Teil des eingebauten Tanks (3) mündet und die diesen eingebauten Tank mit einem Auslassanschluss des Flugzeugs (11) verbindet, der außerhalb des Flugzeugs (1) mündet, wobei diese Leitung zur Ableitung von Gas (81) mit einem Steuerventil (82) versehen ist, dessen Öffnen und Schließen von der zentralen Steuerungseinheit (7) gesteuert werden, wobei dieser Auslassanschluss des Flugzeugs (11) dazu ausgelegt ist, über eine Ansaugleitung (91) mit einer Vorrichtung zum Ansaugen von Gas (92) verbindbar zu sein.

8. Vorrichtung zur Regulierung des Drucks nach einem der vorangehenden Ansprüche, **dadurch gekennzeichnet, dass** sie eine Vorrichtung (83) zum Zuerstäuben von kryogenem Kraftstoff in flüssigem Zustand umfasst, die im Inneren des eingebauten Tanks (3) im oberen Teil desselben angeordnet ist, wobei diese Zerstäubungsvorrichtung (83) mit einer Leitung (84) zur Zufuhr von Flüssigkeit verbunden ist, die mit einem Einlassanschluss des Flugzeugs (12) versehen ist, der außerhalb des Flugzeugs (1) mündet, wobei diese Leitung zur Zufuhr von Flüssigkeit (84) mit einem Steuerventil (85) versehen ist, dessen Öffnen und Schließen von der zentralen Steuerungseinheit (7) gesteuert werden, wobei dieser Einlassanschluss des Flugzeugs (12) dazu ausgelegt ist, über eine Zuführleitung (94) mit einer Pumpvorrichtung (95) und einem externen Tank (93) zum Lagern von kryogenem Kraftstoff eines Flughafens verbindbar zu sein zu können, um die Zerstäubungsvorrichtung (83) mit kryogenem Kraftstoff in flüssigem Zustand zu versorgen.

9. Vorrichtung zur Regulierung des Drucks nach einem der vorangehenden Ansprüche, **dadurch gekennzeichnet, dass** sie eine Einfüllleitung (86) umfasst, die im unteren Teil des eingebauten Tanks (3) mündet, wobei diese Einfüllleitung (86) mit einem Steuerventil (85) versehen ist, dessen Öffnen und Schließen von der zentralen Steuerungseinheit (7) gesteuert werden, wobei diese Einfüllleitung (86) ebenfalls mit einem Einlassanschluss (12) versehen ist, der außerhalb des Flugzeugs (1) mündet, wobei dieser Einlassanschluss (12) dazu ausgelegt ist, über eine Zuführleitung (94) mit einer Pumpvorrichtung (95) und einem externen Tank (93) zum Lagern von kryogenem Kraftstoff eines Flughafens verbindbar zu sein, um den eingebauten Tank (3) mit kryogenem Kraftstoff in flüssigem Zustand zu versorgen.

10. Flugzeug (1), umfassend mindestens einen eingebauten Tank zum Lagern von kryogenem Kraftstoff (3) wie Erdgas und mindestens eine Turbomaschine, die mit einer Brennkammer (10) versehen ist, die mit dem kryogenen Kraftstoff in flüssigem Zustand und in gasförmigem Zustand arbeitet, **dadurch gekennzeichnet, dass** es eine Vorrichtung zur Regulierung des Drucks (2) nach einem der vorangehenden Ansprüche umfasst.

11. Anordnung zur Regulierung des Drucks im Inneren eines eingebauten Tanks (3) zur Lagerung von kryogenem Kraftstoff wie Erdgas in flüssigem oder gasförmigem Zustand, **dadurch gekennzeichnet, dass** sie umfasst:
- ein Flugzeug (1) und eine Flughafenanlage (9),
und dass das Flugzeug (1) den eingebauten Tank (3) und mindestens eine Turbomaschine umfasst, die mit einer Brennkammer (10) versehen ist, die mit dem kryogenen Kraftstoff versorgt wird und eine Vorrichtung zur Regulierung des Drucks nach den Ansprüchen 7, 8 und 9,
und dass die Flughafenanlage (9) mindestens einen externen Tank (93) zum Lagern von kryogenem Kraftstoff, mindestens eine Ansaugleitung (91) und/oder mindestens eine Zuführleitung (94) umfasst, wobei die Ansaugleitung (91) mit einer Vorrichtung zum Ansaugen von Gas (92) versehen ist und mit einem Ansauganschluss (96) verbunden ist, der dazu ausgelegt ist, mit dem Auslassanschluss (11) des Flugzeugs verbindbar zu sein, wobei die Zuführleitung (94) mit einer Pumpvorrichtung (95) versehen und mit dem externen Tank (93) und einem Zuführanschluss (97) verbunden ist, der dazu ausgelegt ist, mit dem Einlassanschluss (12) des Flugzeugs verbindbar zu sein.

12. Verfahren zur Regulierung des Drucks im Inneren eines eingebauten Tanks (3) zur Lagerung von kryogenem Kraftstoff wie Erdgas in flüssigem oder gasförmigem Zustand, wobei sich dieser eingebaute Tank (3) im Inneren eines Flugzeugs (1) befindet und dieses Flugzeug (1) eine Vorrichtung zur Regulierung des Drucks nach einem der Ansprüche 1 bis 9 umfasst, wobei dieser kryogene Kraftstoff die Brennkammer (10) einer Turbomaschine des Flugzeugs versorgt, **dadurch gekennzeichnet, dass** es die Schritte umfasst, die darin bestehen:
- Ermitteln des Drucks im Inneren des eingebauten Tanks (3) mit Hilfe des Drucksensors (5),
- Vergleichen dieses Drucks mit dem Solldruck,
- und wenn der Druck im eingebauten Tank (3) unter dem Solldruck liegt, Öffnen des zweiten Regulierventils (432, 411) und gegebenenfalls des zweiten Steuerventils (434) der Rückführungsleitung (43) und Ingangsetzen der Überförderungspumpe (35), um den flüssigen kryogenen Kraftstoff in gasförmigen kryogenen Kraftstoff im ersten Wärmetauscher (430) umzuwandeln und ihn wieder in den oberen Teil des eingebauten Tanks (3) einzuleiten.

13. Verfahren zur Regulierung des Drucks nach Anspruch 12, wobei das Flugzeug (1) eine Vorrichtung zur Regulierung des Drucks nach Anspruch 2 umfasst, **dadurch gekennzeichnet, dass** es die Schritte umfasst, die darin bestehen:
- Ermitteln des Drucks im Inneren des eingebauten Tanks (3) mit Hilfe des Drucksensors (5),
- Vergleichen dieses Drucks mit dem Solldruck,
- und wenn der Druck im eingebauten Tank (3) unter dem Solldruck liegt, Öffnen des zweiten Steuerventils (434), um den komprimierten gasförmigen kryogenen Kraftstoff, der im Puffertank (433) enthalten ist, in den eingebauten Tank (3) zu übertragen, bis der Druck im Inneren dieses eingebauten Tanks (3) gleich dem Solldruck ist.

14. Verfahren nach Anspruch 12 oder 13, **dadurch gekennzeichnet, dass** es mit einer Anordnung nach Anspruch 11 durchgeführt wird und dass es die Schritte umfasst, die, wenn das Flugzeug (1) im Stillstand und mit der Flughafenanlage (9) verbunden ist, darin bestehen:
- Ermitteln des Drucks im Inneren des eingebauten Tanks (3) mit Hilfe des Drucksensors (5),
- Vergleichen dieses Drucks mit dem Solldruck,
- wenn der Druck im eingebauten Tank (3) unter dem Solldruck liegt, Öffnen des Steuerventils (85) der Leitung zur Zufuhr von Flüssigkeit (84) und Ingangsetzen der Pumpvorrichtung (95) der Flughafenanlage (9), um kryogenen Kraftstoff in flüssigem Zustand aus dem externen Tank (93) anzusaugen und ihn in den eingebauten Tank (3) einzuleiten und wenn der Druck im eingebauten Tank (3) über dem Solldruck liegt, Öffnen des Steuerventils (82) der Leitung zur Ableitung von Gas (81) und Ingangsetzen der Vorrichtung zum Ansaugen von Gas (92) der Flughafenanlage (9), um kryogenen Kraftstoff in gasförmigem Zustand anzusaugen, der sich im eingebauten Tank (3) befindet.

## Claims

1. A device (2) for regulating the pressure inside an on-board storage tank for cryogenic fuel such as natural gas, part of which is in the liquid state and another part of which is in the gaseous state, this cryogenic fuel being intended to supply a combustion chamber (10) of an aircraft turbomachine (1), **characterized in that** it comprises:
- an on-board tank (3) for storing and supplying cryogenic fuel to said combustion chamber (10), this tank (3) comprising a booster pump (35), located at the lower part of said on-board tank (3),
- a mixing chamber (100), configured to be connected to said combustion chamber,
- a first line (41) connecting said on-board tank (3) to said mixing chamber (100) in order to allow the latter to be supplied with cryogenic fuel in the liquid state, this first line (41) being provided with at least one pressurizing pump (412) and a first regulation valve (410, 411),
- a second line (42) connecting said on-board tank (3) to said mixing chamber (100) in order to allow the latter to be supplied with cryogenic fuel in the gaseous state, this second line (42) being provided with at least one compressor (421) and a first control valve (420),
- a recirculation line (43) connecting said booster pump (35) to the upper part of the tank (3), this recirculation line (43) being equipped with a second regulation valve (432, 411) as well as a first heat exchanger (430) that allows the cryogenic fuel to pass from the liquid state to the gaseous state,
- a pressure sensor (5) detecting the pressure inside said on-board tank (3),
- a central control unit (7) receiving pressure data from said pressure sensor (5) and controlling the total or partial opening or the closing of the different regulation valves (410, 411, 432) and of the first control valve (420) and the starting or stopping of the pressurizing pump (412), the booster pump (35) and the compressor (421), as a function of the value of a setpoint pressure inside said on-board tank (3).

2. The pressure regulating device according to claim 1, **characterized in that** it comprises a buffer tank (433) disposed on the recirculation line (43) downstream of the first heat exchanger (430) and a second control valve (434) disposed on the recirculation line (43) between said buffer tank (433) and the upper part of the on-board storage tank (3), **in that** a first three-way valve (422) is disposed on said second line (42) so that its inlet way is connected downstream of the compressor (421), one of its outlet ways is connected to said mixing chamber (100) and its other outlet way is connected to said buffer tank (433) by a bypass line (44), this second control valve (434) and this first three-way valve (422) being controlled by said central control unit (7), and **in that** said first three-way valve (422) can be put either in a first position in which it connects the tank (3) exclusively to the mixing chamber (100), or in a second position in which it connects the tank (3) exclusively to the buffer tank (433) to allow the latter to be filled with cryogenic fuel in the gaseous state, compressed by the compressor (421), or in a plurality of intermediate positions in which it connects the tank (3) both to the mixing chamber (100) and to the buffer tank (433), while allowing a more or less significant flow rate to pass to one or the other, depending on the intermediate position in which it is located.

3. The pressure regulating device according to claim 1 or 2, **characterized in that** a second heat exchanger (413) is disposed on the first line (41), between the first regulation valve (410, 411) and the mixing chamber (100) to vaporize the liquid cryogenic fuel before it enters the mixing chamber (100).

4. The pressure regulating device according to any of the preceding claims, **characterized in that** the first regulation valve and the second regulation valve are only one second three-way valve (411), which is disposed on said first line (41), downstream of the pressurizing pump (412), so that its inlet way is connected to this pressurizing pump (412), one of its outlet ways is connected to said mixing chamber (100) and its other outlet way is connected to the recirculation line (43) upstream of the first heat exchanger (430), and **in that** this second three-way valve (411) is controlled by said central control unit (7) to be put either in a first position in which it connects the tank (3) exclusively to the mixing chamber (100), or in a second position in which it connects the tank (3) exclusively to the first heat exchanger (430), or in a plurality of intermediate positions in which it connects the tank (3) both to the mixing chamber (100) and to the first heat exchanger (430), while allowing a more or less signignficant flow rate to pass to one or the other, depending on the intermediate position in which it is located.

5. The pressure regulating device according to any of the preceding claims, **characterized in that** it comprises a valve (6) disposed at the upper part of said on-board tank (3), calibrated at a safety pressure, higher than the atmospheric pressure and than said setpoint pressure and which allows releasing cryogenic fuel in the gaseous state, out of said on-board tank (3), if the pressure inside the latter exceeds said safety pressure.

6. The pressure regulating device according to any of the preceding claims, **characterized in that** at least one of the exchangers among the first heat exchanger (430) and the second heat exchanger (413) is a cryogenic fuel/hot fluid of the aircraft exchanger, this hot fluid being chosen among air coming from outside the aircraft, the cabin or the exhaust of a gas turbine.

7. The pressure regulating device according to any of the preceding claims, **characterized in that** it comprises a gas discharge line (81) opening out at the upper part of said on-board tank (3) and which connects this on-board tank to an outlet fitting (11) of the aircraft opening out outside the aircraft (1), this gas discharge line (81) being provided with a monitoring valve (82) whose opening and closing are controlled by said central control unit (7), this outlet fitting (11) of the aircraft being configured to be able to be connected, via a suction line (91), to a gas suction device (92).

8. The pressure regulating device according to any of the preceding claims, **characterized in that** it comprises a device (83) for spraying cryogenic fuel in the liquid state, disposed inside said on-board tank (3), in the upper part thereof, this spray device (83) being connected to a liquid supply line (84) provided with an inlet fitting (12) of the aircraft opening out outside the aircraft (1), this liquid supply line (84) being provided with a monitoring valve (85) whose opening and closing are controlled by said central control unit (7), this inlet fitting (12) of the aircraft being configured to be able to be connected, via an introduction line (94), to a pumping device (95) and to an outer cryogenic fuel storage tank (93) of an airport, to supply said spray device (83) with cryogenic fuel in the liquid state.

9. The pressure regulating device according to any of the preceding claims, **characterized in that** it comprises a filling line (86) which opens out at the lower part of said on-board tank (3), this filling line (86) being provided with a monitoring valve (85) whose opening and closing are controlled by said central control unit (7), this filling line (86) also being provided with an inlet fitting (12) opening out outside the aircraft (1), this inlet fitting (12) being configured to be able to be connected, via an introduction line (94), to a pumping device (95) and to an outer cryogenic fuel storage tank (93) of an airport, to supply said on-board tank (3) with cryogenic fuel in the liquid state.

10. An aircraft (1) comprising at least one on-board storage tank (3) for cryogenic fuel such as natural gas, and at least one turbomachine provided with a combustion chamber (10) operating with said cryogenic fuel in the liquid state and in the gaseous state, **characterized in that** it comprises a pressure regulating device (2) in accordance with any one of the preceding claims.

11. An assembly for regulating the pressure inside an on-board storage tank (3) for cryogenic fuel such as natural gas, in the liquid or gaseous state, **characterized in that** it comprises:
- an aircraft (1) and an airport facility (9),
**in that** the aircraft (1) comprises said on-board tank (3) and at least one turbomachine provided with a combustion chamber (10) supplied with said cryogenic fuel and a device for regulating the pressure according to claims 7, 8 and 9,
and **in that** the airport facility (9) comprises at least one outer cryogenic fuel storage tank (93), at least one suction line (91) and/or at least one introduction line (94), said suction line (91) being provided with a gas suction device (92) and being connected to a suction fitting (96) configured to be able to be connected to the outlet fitting (11) of the aircraft, said introduction line (94) being provided with a pumping device (95) and being connected to said outer tank (93) and to an introduction fitting (97) configured to be able to be connected to the inlet fitting (12) of the aircraft.

12. A method for regulating the pressure inside an on-board storage tank (3) for cryogenic fuel such as natural gas, in the liquid or gaseous state, this on-board tank (3) being located inside an aircraft (1) and this aircraft (1) comprising a device for regulating the pressure according to any one of claims 1 to 9, this cryogenic fuel supplying the combustion chamber (10) of a turbomachine of said aircraft, **characterized in that** it comprises the steps consisting in:
- detecting the pressure inside said on-board tank (3) using said pressure sensor (5),
- comparing this pressure with the setpoint pressure,
- and when the pressure in the on-board tank (3) is lower than the setpoint pressure, opening the second regulation valve (432, 411) and possibly the second control valve (434) of the recirculation line (43) and starting the booster pump (35), so as to transform the liquid cryogenic fuel into gaseous cryogenic fuel in the first heat exchanger (430) and to reinject it into the upper part of the on-board tank (3).

13. The pressure regulating method according to claim 12, said aircraft (1) comprising a pressure regulating device according to claim 2, **characterized in that** it comprises the steps consisting in:
- detecting the pressure inside said on-board tank (3) using said pressure sensor (5),
- comparing this pressure with the setpoint pressure,
- and when the pressure in the on-board tank (3) is lower than the setpoint pressure, opening the second control valve (434) to transfer the compressed gaseous cryogenic fuel contained in said buffer tank (433) to said on-board tank (3) until the pressure inside this on-board tank (3) is equal to the setpoint pressure.

14. The pressure regulating method according to claim 12 or 13, **characterized in that** it is implemented with the assembly according to claim 11 and **in that** it comprises the steps consisting, while the aircraft (1) is stopped and is connected to the airport facility (9), in:
- detecting the pressure inside said on-board tank (3) using said pressure sensor (5),
- comparing this pressure with the setpoint pressure,
- if the pressure in the on-board tank (3) is lower than the setpoint pressure, opening the monitoring valve (85) of the liquid supply line (84) and starting the pumping device (95) of the airport facility (9) to suck cryogenic fuel in the liquid state from the outer tank (93) and to introduce it into said on-board tank (3) and if the pressure in the on-board tank (3) is higher than the setpoint pressure, opening the monitoring valve (82) of the gas discharge line (81) and starting the gas suction device (92) of the airport facility (9) to suck cryogenic fuel in the gaseous state located in said on-board tank (3).
